# EUROPÄISCHE PATENTSCHRIFT

(11) **EP 1 197 357 B1**
(45) Veröffentlichungstag und Bekanntmachung des Hinweises auf die Patenterteilung: **03.08.2005**
(21) Anmeldenummer: 01123396.2
(22) Anmeldetag: 11.10.2001
(51) Int. Cl.: B60D 1/06, B60D 1/52

(54) **Anhängevorrichtung**
Trailer coupling
Attelage de remorque

(30) Priorität: 12.10.2000 DE 10050414; 26.05.2001 DE 10125781
(43) Veröffentlichungstag der Anmeldung: 17.04.2002
(73) Patentinhaber: ORIS FAHRZEUGTEILE HANS RIEHLE GmbH, 71696 Möglingen (DE)
(72) Erfinder: Kleb, Emmerich, 71706 Markgröningen (DE); Riehle, Jörg, 70439 Stuttgart (DE); Fischer, Michael, 71679 Asperg (DE)
(74) Vertreter: HOEGER, STELLRECHT & PARTNER Patentanwälte

(56) Entgegenhaltungen:
- EP-A- 0 047 961
- EP-A- 0 093 795
- EP-A- 0 223 996
- EP-A- 1 160 104
- DE-A- 10 015 335

## Beschreibung

Die Erfindung betrifft eine Anhängevorrichtung, umfassend einen Kugelhals, eine an einem ersten Ende des Kugelhalses angeordnete Kupplungskugel, ein an einem zweiten Ende des Kugelhalses angeordnetes Halteelement, welches in eine fahrzeugfeste Aufnahme einsetzbar ist und eine Fixiereinrichtung aufweist, mit welcher in einer Fixierstellung das Halteelement an der Aufnahme fixierbar ist und in eine Nichtfixierstellung das Halteelement relativ zur Aufnahme bewegbar ist, und ein der Kupplungskugel zugeordnetes Anhängeverhinderungselement, welches in einer Anhängeverhinderungsstellung ein Aufsetzen einer Kupplungskugelaufnahme verhindert, und in einer Anhängestellung das Aufsetzen der Kupplungskugelaufnahme zuläßt, wobei eine Kopplungseinrichtung zwischen den Stellungen der Fixiereinrichtung und den Stellungen des Anhängeverhinderungselements vorgesehen ist.

Derartige Anhängevorrichtungen sind aus der EP 0 223 996 bekannt.

Bei diesen Anhängevorrichtungen besteht das Problem, daß für die Bedienungsperson die Fixiereinrichtung vermeintlich in der Fixierstellung steht, tatsächlich jedoch die Fixierstellung nicht vollständig erreicht ist, so daß sich bei dem Anhängen eines Anhängers an eine derartige Anhängekupplung ein Unfall dadurch ergeben kann, daß sich das Halteelement des Kugelhalses aus der fahrzeugfesten Aufnahme löst.

Der Erfindung liegt daher die Aufgabe zugrunde, eine Anhängekupplung der gattungsgemäßen Art derart zu verbessern, daß für eine Bedienungsperson das Erreichen der Fixierstellung durch die Fixiereinrichtung unzweideutig erkennbar ist.

Diese Aufgabe wird bei einer Anhängekupplung der eingangs beschriebenen Art erfindungsgemäß dadurch gelöst, daß die Kopplungseinrichtung Stellungen der Fixiereinrichtung mit den Stellungen des Anhängeverhinderungselements derart koppelt, daß nur dann, wenn die Fixiereinrichtung in der Fixierstellung steht, das Anhängeverhinderungselement in die Anhängestellung bewegbar ist und dann, wenn die Fixiereinrichtung außerhalb der Fixierstellung steht, das Anhängeverhinderungselement gegen eine Bewegung von der Anhängeverhinderungsstellung in die Anhängestellung blockiert ist.

Weiterbildungen der Erfindung sind in den abhängigen Ansprüchen angegeben.

Der Vorteil der erfindungsgemäßen Lösung ist somit darin zu sehen, daß durch das Anhängeverhinderungselement und die Kopplungseinrichtung nicht nur die Möglichkeit geschaffen wurde, eindeutig zu erkennen, ob die Fixiereinrichtung die Fixierstellung erreicht hat oder nicht, sondern daß außerdem die Möglichkeit geschaffen wurde, durch das Anhängeverhinderungselement der Bedienungsperson unzweideutig zu vermitteln, daß die Anhängekupplung noch nicht für das Anhängen eines Anhängers bereit ist und somit die Fixierung des Kugelhalses relativ zur Aufnahme zu überprüfen ist.

Die erfindungsgemäße Lösung vermeidet insbesondere Fehlinterpretation einer Anzeige der Stellung der Fixiereinrichtung, da das Blockieren des Kugelhalses für eine Kupplungskugelaufnahme eines Anhängers für jede Bedienungsperson eine eindeutige Aussage beinhaltet.

Insbesondere ist die Wechselwirkung der Kopplungseinrichtung und der Fixiereinrichtung so ausgebildet, daß nur in der Fixierstellung das Anhängeverhinderungselement in die Anhängestellung bewegbar ist, ohne daß damit eine Rückwirkung auf das Fixierelement selbst erfolgt.

Beispielsweise kann das Fixierelement eine Bewegungsbahn für einen Bahnfolger freigeben, ohne dabei in der Anhängestellung des Anhängeverhinderungselements mit dem Bahnfolger in Wechselwirkung zu treten.

Besonders günstig ist jedoch eine Ausführungsform, d.h. eine Weiterbildung der erfindungsgemäßen Lösung, bei welcher die Kopplungseinrichtung die Führungseinrichtung in der Fixierstellung festlegt, wenn das Anhängeverhinderungselement in der Anhängestellung steht.

Bei dieser Lösung ist somit nicht nur das Erreichen der Anhängestellung dann möglich, wenn die Fixiereinrichtung in der Fixierstellung steht, sondern das Erreichen der Anhängestellung hat gleichzeitig die Konsequenz, daß die Fixiereinrichtung in ihrer Fixierstellung blockiert ist und somit ein Lösen der Fixierstellung durch die Kopplungseinrichtung verhindert wird.

Damit ist ein zusätzliches Sicherheitsmerkmal erreicht, so daß sowohl eine Fehlbedienung als auch eine Fehlfunktion durch teilweise Zerstörung der Betätigungseinrichtung der Fixiereinrichtung nicht ein Lösen der Fixiereinrichtung bewirken kann, sondern die Fixiereinrichtung nach wie vor in ihrer Fixierstellung bleibt, da die Kopplungseinrichtung die Fixierstellung der Fixiereinrichtung festlegt.

Besonders günstig ist es dabei, wenn die Kopplungseinrichtung auf ein Betätigungselement der Fixiereinrichtung wirkt, welches seinerseits direkt auf das Halteelement in der Aufnahme fixierende Fixierelemente einwirkt.

Das Anhängeverhinderungselement kann dabei in unterschiedlichster Art und Weise vorgesehen sein.

Beispielsweise ist es denkbar, ein Anhängeverhinderungselement vorzusehen, welches in der Anhängeverhinderungsstellung auf den Kugelhals aufgesetzt und an diesem gehalten ist und zum Erreichen der Anhängestellung vom Kugelhals abzunehmen ist, wobei das Abnehmen des Anhängeverhinderungselements durch die Kopplungseinrichtung dann verhindert wird, wenn die Fixiereinrichtung nicht die Fixierstellung erreicht hat.

Besonders günstig ist es jedoch gemäß einer Weiterbildung der erfindungsgemäßen Lösung, wenn das Anhängeverhinderungselement an dem Kugelhals bewegbar gelagert ist.

Beispielsweise wäre es dabei denkbar, das Anhängeverhinderungselement am Kugelhals um eine bestimmte Strecke verschiebbar zu lagern. Besonders einfache konstruktive Lösungen ergeben sich jedoch dann, wenn das Anhängeverhinderungselement an dem Kugelhals schwenkbar gelagert ist.

Hinsichtlich der Lagerung des Anhängeverhinderungselements wurden im Zusammenhang mit der bisherigen Erläuterung der einzelnen Ausführungsbeispiele keine näheren Angaben gemacht. So sieht ein besonders vorteilhaftes Ausführungsbeispiel vor, daß das Anhängeverhinderungselement an einander gegenüberliegenden Seiten des Kugelhalses gelagert ist, um somit eine möglichst stabile Lagerung des Anhängeverhinderungselements zu erreichen.

Ferner wurden im Zusammenhang mit der bisherigen Erläuterung der einzelnen Ausführungsbeispiele keine näheren Angaben zur Anordnung des Anhängeverhinderungselements gemacht.

Beispielsweise könnte das Anhängeverhinderungselement auf einer dem Halteelement abgewandten Seite angeordnet sein.

Eine besonders günstige Lösung sieht jedoch vor, daß das Anhängeverhinderungselement auf einer dem Halteelement zugewandten Seite der Kupplungskugel angeordnet ist und auf dieser Seite von der Anhängeverhinderungsstellung in die Anhängestellung und umgekehrt bewegbar ist.

Eine besonders zweckmäßige Lösung sieht bei dieser Art der Anordnung des Anhängeverhinderungselements vor, daß dieses zum Bewegen in die Anhängestellung in Richtung des Halteelements bewegbar ist.

Hinsichtlich der Ausbildung des Anhängeverhinderungselements dergestalt, daß dieses ein Anhängen eines Anhängers verhindert, sind die unterschiedlichsten Möglichkeiten denkbar.

Beispielsweise wäre es denkbar, das Anhängeverhinderungselement derart auszubilden, daß dieses ein aus der Kupplungskugel ausfahrbares Element, beispielsweise ein Dorn, ist, welcher verhindert, daß die Kupplungskugelaufnahme auf die Kupplungskugel aufsetzbar ist.

Diese Lösung hat jedoch den Nachteil, daß damit dieses Anhängeverhinderungselement aus der Kupplungskugel ausfahrbar oder in diese einfahrbar sein muß.

Aus diesem Grund sieht eine besonders günstige Lösung vor, daß das Anhängeverhinderungselement die Kupplungskugel zumindest bereichsweise oberflächlich übergreifend ausgebildet ist.

Eine derartige Lösung umfaßt beispielsweise ein Anhängeverhinderungselement, welches die Kupplungskugel komplett abdeckt.

Eine besonders günstige Lösung sieht jedoch vor, daß das Anhängeverhinderungselement eine partielle Abdeckung für die Kupplungskugel umfaßt.

Eine derartige Abdeckung könnte beispielsweise als schalenartige Abdeckung für die Kupplungskugel ausgebildet sein.

Eine andere vorteilhafte Lösung sieht vor, daß das Anhängeverhinderungselement einen die Kupplungskugel zumindest bereichsweise oberflächlich übergreifenden Bügel aufweist.

Ein derartiges Anhängeverhinderungselement läßt sich besonders einfach herstellen und ist völlig ausreichend für das Verhindern einer Verbindung zwischen einer Kupplungskugelaufnahme eines Anhängers und der Kupplungskugel.

Bei der Definition des oberflächlichen Übergreifens der Kupplungskugel ist nicht zwingend, daß damit das Anhängeverhinderungselement an der Kupplungskugel anliegen muß. Es ist im Rahmen der erfindungsgemäßen Lösung sogar von Vorteil, wenn das Anhängeverhinderungselement im Abstand von einer Oberfläche der Kupplungskugel verläuft.

Besonders eindeutig ist jedoch das Verhindern eines Anhängers dann erreichbar, wenn das Anhängeverhinderungselement bis zur Oberseite der Kupplungskugel reicht, vorzugsweise die Oberseite übergreift.

Hinsichtlich der Ausbildung der Kopplungseinrichtung wurden bislang keine näheren Angaben gemacht.

Ein besonders vorteilhaftes Ausführungsbeispiel sieht vor, daß die Kopplungseinrichtung das Erreichen der Fixierstellung durch die Fixiereinrichtung erfaßt.

Besonders günstig ist es dabei, wenn die Kopplungseinrichtung ein Überführen der Fixiereinrichtung von der Fixierstellung in die Nichtfixierstellung dann verhindert, wenn das Anhängeverhinderungselement in der Anhängestellung steht.

Ferner ist es besonders günstig, wenn außerdem die Kopplungseinrichtung so ausgebildet ist, daß sie ein Überführen des Anhängeverhinderungselements von der Anhängeverhinderungsstellung in die Anhängestellung dann verhindert, wenn die Fixiereinrichtung nicht in der Fixierstellung steht.

Eine konstruktiv besonders zweckmäßige Ausführung sieht dabei vor, daß die Kopplungseinrichtung ein längsbewegliches Element aufweist, über welches eine Kopplung der Stellungen der Fixiereinrichtung mit Stellungen des Anhängeverhinderungselements erfolgt.

Besonders zweckmäßig läßt sich die Kopplungseinrichtung dadurch ausbilden, daß eine zum Erreichen der Anhängestellung erforderliche Bewegung des längsbeweglichen Elements blockiert ist, wenn die Fixiereinrichtung außerhalb der Fixierstellung steht.

Eine derartige Blockierung ist konstruktiv vorteilhaft dadurch realisierbar, daß die Kopplungseinrichtung eine Kulissenbahn mit einem Bahnfolger umfaßt, von denen einer mit dem längsbeweglichen Element gekoppelt ist.

Besonders zweckmäßig ist es hierbei, wenn die Kulissenbahn mit der Fixiereinrichtung gekoppelt ist und der Bahnfolger mit dem längsbeweglichen Element gekoppelt ist.

Hinsichtlich der Ausbildung des längsbeweglichen Elements sind die unterschiedlichsten Möglichkeiten denkbar.

Eine vorteilhafte Ausführungsform sieht einen Stößel, beispielsweise in Form eines Bolzens als längsbewegliches Element vor.

Eine andere vorteilhafte Lösung sieht vor, daß die Kopplungseinrichtung ein biegbares längsbewegliches Element umfaßt, welches zur Verbindung mit dem Anhängeverhinderungselement längs des Kugelhalses geführt werden kann.

Eine weitere vorteilhafte Ausbildung der Kopplungseinrichtung sieht vor, daß die Kopplungseinrichtung eine Sicherungsvorrichtung für die Fixiereinrichtung umfaßt, welche in einer Sicherungsstellung ein Überführen der Fixiereinrichtung von der Fixierstellung in die Nichtfixierstellung verhindert und in einer Lösestellung das Überführen der Fixiereinrichtung von der Fixierstellung in die Nichtfixierstellung zuläßt.

Diese Sicherungsvorrichtung wirkt vorzugsweise so mit dem längsbeweglichen Element zusammen, daß bei in der Anhängestellung stehendem Anhängeverhinderungselement mit dem längsbeweglichen Element ein Übergang der Sicherungsvorrichtung von der Sicherungsstellung in die Lösestellung blockierbar ist.

Eine weitere günstige Ausbildung dieser Lösung sieht vor, daß die Sicherungsvorrichtung derart mit der Fixiereinrichtung zusammenwirkt, daß die Sicherungsvorrichtung nur in der Fixierstellung der Fixiereinrichtung in die Sicherungsstellung übergehen kann, und somit die Sicherungsstellung nur auch dann erreichbar ist, wenn die Fixiereinrichtung in der Fixierstellung steht.

Eine besonders günstige Wechselwirkung zwischen der Sicherungsvorrichtung und der Fixiervorrichtung läßt sich dann erreichen, wenn die Sicherungsvorrichtung in allen Stellungen der Fixiereinrichtung außerhalb der Fixierstellung in der Lösestellung steht.

Ferner ist es zur eindeutigen Festlegung der möglichen Stellungen des Anhängeverhinderungselements zweckmäßig, wenn die Sicherungsvorrichtung in der Lösestellung über das längsbewegliche Element ein Bewegen des Anhängeverhinderungselements von der Anhängeverhinderungsstellung in die Anhängestellung blockiert.

Im Rahmen der Erläuterung der einzelnen Ausführungsbeispiele der Kopplungseinrichtung wurde nicht näher darauf eingegangen, wie ein Erfassen der Fixierstellung der Fixiereinrichtung erfolgt.

Besonders günstig ist es dabei, wenn die Kopplungseinrichtung über das längsbewegliche Element die Fixierstellung der Fixiereinrichtung erfaßt.

Zweckmäßigerweise kann dabei ein erfassen der Fixierstellung unmittelbar durch das längsbewegliche Element erfolgen, nämlich beispielsweise dadurch, daß dieses längsbewegliche Element direkt mit der Fixiereinrichtung zusammenwirkt.

Eine andere vorteilhafte Lösung sieht vor, daß das längsbewegliche Element mit der Sicherungsvorrichtung zum Erfassen der Fixierstellung der Fixiereinrichtung zusammenwirkt.

Hinsichtlich der Einwirkung der Kopplungseinrichtung auf das Anhängeverhinderungselement wurden bislang keine näheren Angaben gemacht. Um das Anhängeverhinderungselement selbsttätig in der Anhängeverhinderungsstellung zu halten, ist vorzugsweise vorgesehen, daß die Kopplungseinrichtung das Anhängeverhinderungselement in Richtung seiner Anhängeverhinderungsstellung - vorzugsweise durch einen elastischen Kraftspeicher - beaufschlagt und somit eine Bedienungsperson manuell auf das Anhängeverhinderungselement einwirken muß, um dieses in die Anhängestellung zu bewegen, wobei die Anhängestellung nur bei Vorliegen der Fixierstellung der Fixierstellung erreichbar ist.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: einen partiellen Längsschnitt durch ein erstes Ausführungsbeispiel einer erfindungsgemäßen Anhängevorrichtung;
- Fig. 2: eine Ansicht in Richtung des Pfeils A in Fig. 1;
- Fig. 3: eine Draufsicht in Richtung des Pfeils B in Fig. 1 ohne Darstellung einer Aufnahme;
- Fig. 4: einen Schnitt ähnlich Fig. 1 durch ein zweites Ausführungsbeispiel einer erfindungsgemäßen Anhängevorrichtung;
- Fig. 5: eine Ansicht ähnlich Fig. 2 des zweiten Ausführungsbeispiels;
- Fig. 6: eine Draufsicht ähnlich Fig. 3 des zweiten Ausführungsbeispiels;
- Fig. 7: einen Schnitt ähnlich Fig. 1 durch ein drittes Ausführungsbeispiel einer erfindungsgemäßen Anhängevorrichtung;
- Fig. 8: eine Ansicht ähnlich Fig. 2 des dritten Ausführungsbeispiels;
- Fig. 9: eine Draufsicht ähnlich Fig. 3 des dritten Ausführungsbeispiels;
- Fig. 10: einen Längsschnitt ähnlich Fig. 1 durch ein viertes Ausführungsbeispiel einer erfindungsgemäßen Anhängevorrichtung;
- Fig. 11: eine Draufsicht ähnlich Fig. 3 auf das vierte Ausführungsbeispiel;
- Fig. 12: eine Explosionsdarstellung eines Zusammenwirkens einer Antriebswelle mit einem Betätigungsknopf;
- Fig. 13: eine Seitenansicht in Richtung des Pfeils C in Fig. 14 bei einem fünften Ausführungsbeispiel einer erfindungsgemäßen Anhängevorrichtung;
- Fig. 14: eine Ansicht in Richtung des Pfeils D in Fig. 13 des fünften Ausführungsbeispiels;
- Fig. 15: eine Draufsicht auf das fünfte Ausführungsbeispiel in Richtung des Pfeils F in Fig. 13 und
- Fig. 16: einen Schnitt längs Linie 16-16 in Fig. 15.

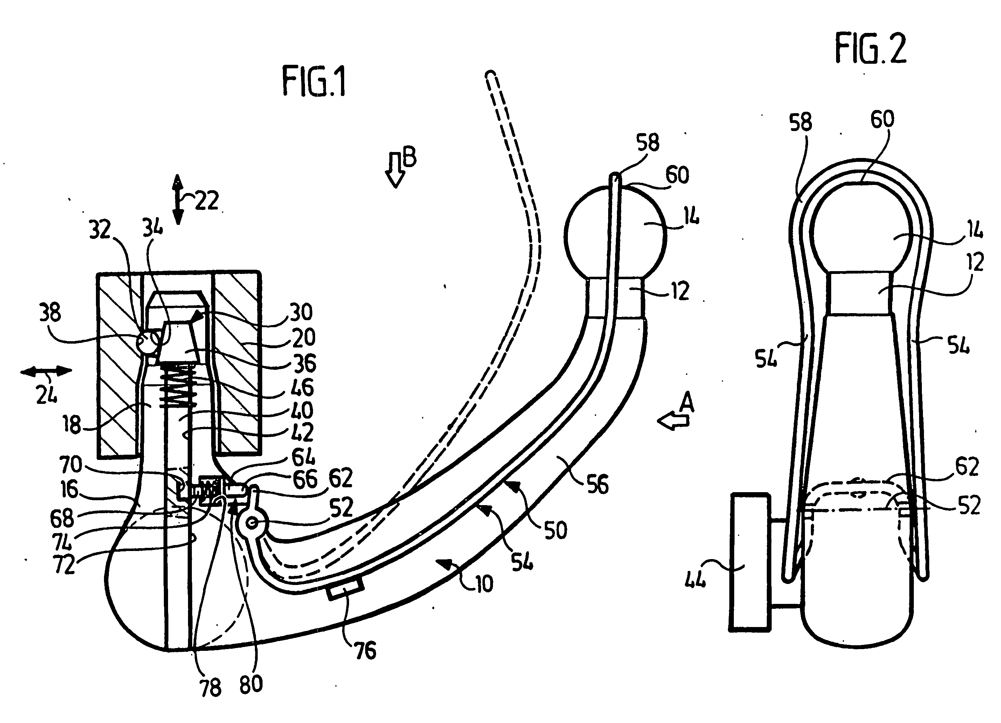

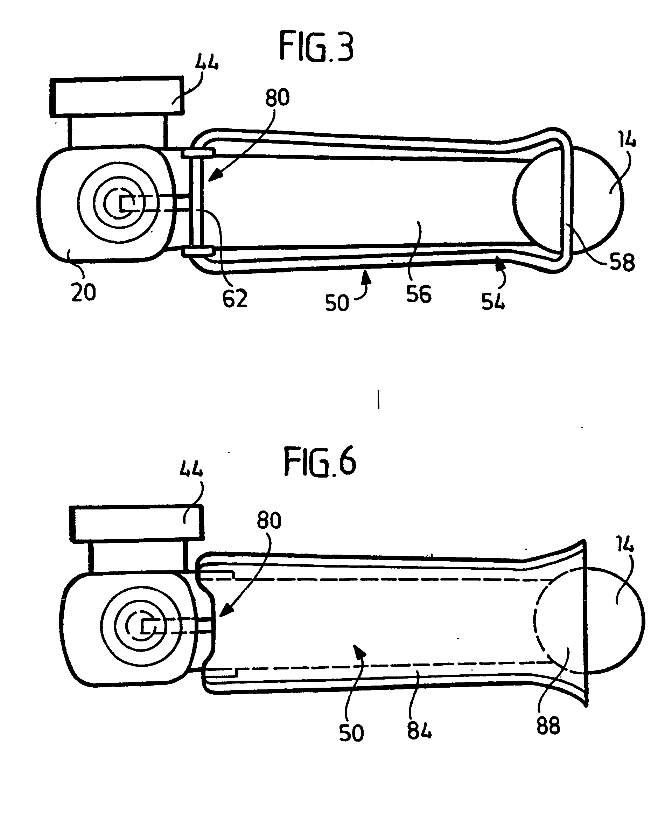

Ein erstes Ausführungsbeispiel einer erfindungsgemäßen Anhängevorrichtung, dargestellt in Fig. 1 bis 3 umfaßt einen als Ganzes mit 10 bezeichneten Kugelhals, welcher an einem ersten Ende 12 eine Kupplungskugel 14 trägt und an einem zweiten Ende 16 ein Halteelement 18 aufweist, das in eine als Ganzes mit 20 bezeichnete fahrzeugfeste Aufnahme in einer Einsetzrichtung 22 einsetzbar ist, wobei die Einsetzrichtung 22 vorzugsweise quer zu einer Fahrzeuglängsrichtung 24 verläuft, die üblicherweise mit der Fahrtrichtung zusammenfällt.

Das Halteelement 18 ist mit einer als Ganzes mit 30 bezeichneten Fixiereinrichtung versehen, welche beispielsweise als Kugeln ausgebildete Fixierelemente 32 aufweist, die in dem Halteelement 18 in einem Führungskanal 34 geführt sind und durch einen Kulissenkörper 36 in Richtung längs des Führungskanals 34 bewegt sind, wobei der in Fig. 1 in seiner Fixierstellung dargestellte Kulissenkörper 36 die Fixierelemente 32 derart beaufschlagt, daß diese in eine Fixieraufnahme 38 im Halteelement 18 eintauchen.

Vorzugsweise ist der Kulissenkörper 36 als Konus ausgebildet und sitzt auf einer Betätigungsstange 40, die in einem Kanal 42 des Halteelements 18 geführt ist und sich durch das Halteelement 18 hindurch bis zum zweiten Ende 16 des Kugelhalses 10 erstreckt und mit einem Handbetätigungselement 44, beispielsweise über ein Zahnstangengetriebe, gekoppelt ist.

Ferner ist der Kulissenkörper 36 noch durch eine Druckfeder 46 elastisch beaufschlagt, welche das Bestreben hat, den Kulissenkörper 36 in seine Fixierstellung zu bewegen.

Wird jedoch durch Betätigen des Handbetätigungselements 44 die Betätigungsstange 40 so verschoben, daß sich der Kulissenkörper 36 in Richtung des zweiten Endes 16 des Kugelhalses 10 in seine Nichtfixierstellung bewegt, so haben die Fixierelemente 32 die Möglichkeit, die Fixieraufnahme 38 dadurch zu verlassen, daß sie sich in Richtung des Kulissenkörpers 36 bewegen und in das Halteelement 18 eintauchen, so daß das Halteelement 18 aus der Aufnahme 20 entnehmbar ist.

Ein derartiger Kugelhals 10 ist mit einem als Ganzes mit 50 bezeichneten Anhängeverhinderungselement versehen, welches um eine Achse 52 schwenkbar gelagert ist und einen sich ausgehend von der Achse 52 erstreckenden Bügel 54 aufweist, welcher sich beiderseits des Kugelhalses 10 längs einem sich vom zweiten Ende 16 bis zum ersten Ende 12 erstreckenden Mittelabschnitt 56 des Kugelhalses 10 folgend erstreckt und im Anschluß daran im Bereich nahe dem ersten Ende 12 in einen U-Abschnitt 58 übergeht, welcher sich ausgehend von dem Bereich nahe dem ersten Ende 12 des Kugelhalses 10 über die Kupplungskugel 14 hinwegerstreckt und eine Oberseite 60 der Kupplungskugel 14 übergreift.

Ferner umfaßt das Anhängeverhinderungselement 50 noch einen sich ausgehend von der Achse 52 auf einer dem Bügel 54 gegenüberliegenden Seite erstreckenden Betätigungsbügel 62, welcher vorzugsweise ebenfalls U-förmig ausgebildet ist und so angeordnet ist, daß er mit einem im Halteelement 18 geführten Stößel 64 zusammenwirkt, welcher mit einem äußeren Ende 66 an dem Betätigungsbügel 62 anliegt und mit einem inneren Ende 68 der Betätigungsstange 40 zugewandt angeordnet ist.

Ferner ist in der Betätigungsstange 40 eine Ausnehmung 70 vorgesehen, die so ausgebildet und angeordnet ist, daß der Stößel 64 nur dann in die Ausnehmung 70 der Betätigungsstange 40 eintauchen kann, wenn der Kulissenkörper 36 und die Betätigungsstange 40 in ihrer Fixierstellung stehen. Haben der Kulissenkörper 36 und die Betätigungsstange 40 die Fixierstellung noch nicht erreicht, so steht die Ausnehmung 70 nicht mehr fluchtend mit dem inneren Ende 68 des Stößels 64, sondern so, daß beim Bewegen des Stößels 64 mit dem inneren Ende 68 in Richtung der Betätigungsstange 40 das innere Ende 68 an eine Außenseite 72 der Betätigungsstange 40 anschlägt und somit in allen Stellungen der Betätigungsstange 40 außerhalb der Fixierstellung durch die Außenseite 72 in seiner Bewegungsfähigkeit blockiert ist.

Ferner ist der Stößel 64 durch eine Feder 74 in Richtung von der Betätigungsstange 40 weg beaufschlagt und wirkt damit mit dem äußeren Ende 66 derart auf den Betätigungsbügel 62, daß dieser bestrebt ist, eine in Fig. 1 durchgezogen gezeichnete Anhängeverhinderungsstellung einzunehmen, in welcher der Bügel 54 mit dem U-Abschnitt 58 die Kupplungskugel 14 auf ihrer Oberseite 60 übergreift und somit ein Anhängen eines Anhängers verhindert.

Diese Anhängeverhinderungsstellung ist entweder dadurch festgelegt, daß der U-Abschnitt 58 des Bügels 54 auf der Kupplungskugel 14 aufliegt, oder beispielsweise durch ein Anschlagelement 76 vorgebbar, auf welchem der Bügel 54 in der Anhängeverhinderungsstellung aufliegt.

Ferner ist der Stößel 64 in einer Führungsbohrung 78 im Halteelement 18 derart geführt und positioniert, daß das auf den Betätigungsbügel 62 wirkende äußere Ende 66 des Stößels 64 aufgrund der Wirkung der Feder 74 den Bügel 54 in seiner Anhängeverhinderungsstellung hält und daß auch durch manuelles Einwirken auf den Bügel 54 dieser nicht aus der Anhängeverhinderungsstellung herausbewegbar ist, sofern der Stößel 64 mit seinem inneren Ende 68 beim Bewegen in Richtung der Betätigungsstange 40 auf die Außenseite 72 derselben wirkt und nicht in die Ausnehmung 70 eintauchen kann.

Erst wenn die Betätigungsstange 40 in der Fixierstellung steht, fluchtet die Ausnehmung 70 mit dem inneren Ende 68 des Stößels 64, so daß dieser eintauchen kann und somit auch der Bügel 54 in die in Fig. 1 gestrichelt dargestellte Anhängestellung bewegbar ist.

Der Betätigungsbügel 62 und der Stößel 64 mit der Ausnehmung 70 stellen somit eine als Ganzes mit 80 bezeichnete Kopplungseinrichtung dar, welche die Fixierstellung und alle übrigen Stellungen der Fixiereinrichtung 30 mit der Anhängeverhinderungsstellung und der Anhängestellung des Anhängeverhinderungselements 50 koppelt und die Anhängestellung stets nur dann zuläßt, wenn die Fixiereinrichtung 30 in der Fixierstellung steht.

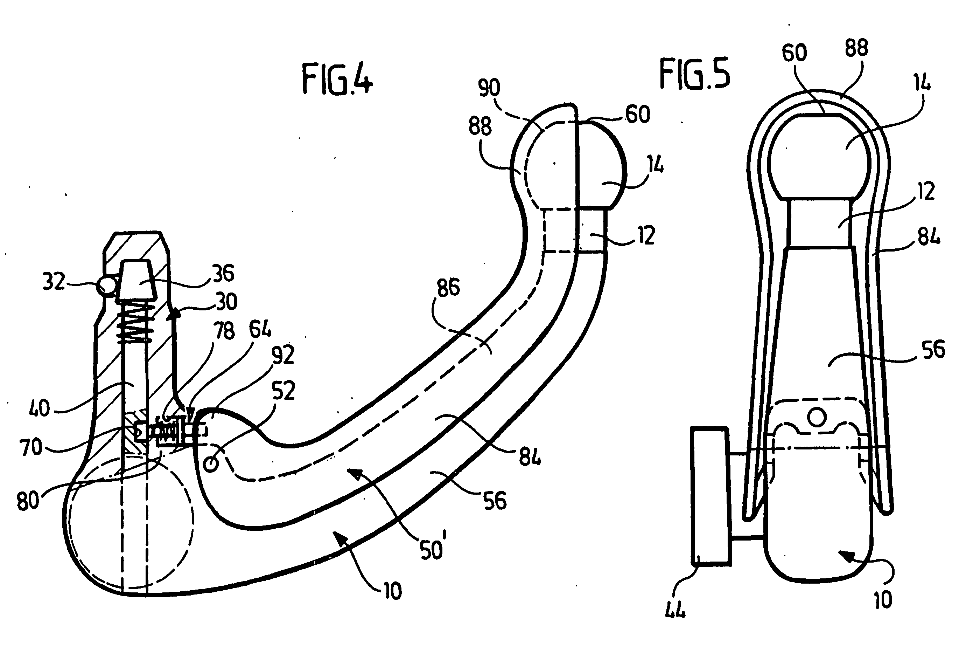

Bei einem zweiten Ausführungsbeispiel einer erfindungsgemäßen Anhängekupplung, dargestellt in den Fig. 4 bis 6, sind diejenigen Elemente, die mit denen des ersten Ausführungsbeispiels identisch sind, mit denselben Bezugszeichen versehen, so daß hinsichtlich der Beschreibung und Funktion derselben vollinhaltlich auf die Ausführungen zum ersten Ausführungsbeispiel Bezug genommen werden kann.

Im Gegensatz zum ersten Ausführungsbeispiel ist beim zweiten Ausführungsbeispiel das Anhängeverhinderungselement 50' nicht als Bügel 54 ausgebildet, sondern als um die Achse 52 schwenkbare Halbschale 84, welche den Mittelabschnitt 56 des Kugelhalses 10 auf einer Oberseite 86 übergreift und auch ausgehend von dem ersten Ende 12 die Kupplungskugel 14 mit einer Halbschale 88 auf ihrer Vorderseite 90 bis zur Oberseite 60 reichend übergreift und somit in dieser Anhängeverhinderungsstellung ein Anhängen eines Anhängers an die Kupplungskugel 14 verhindert.

Ferner weist das Anhängeverhinderungselement 50' noch einen Betätigungsabschnitt 92 auf, welcher auf den Stößel 64 wirkend ausgebildet ist und durch die Kopplungseinrichtung 80 mit den jeweiligen Stellungen der Fixiereinrichtung 30 gekoppelt ist.

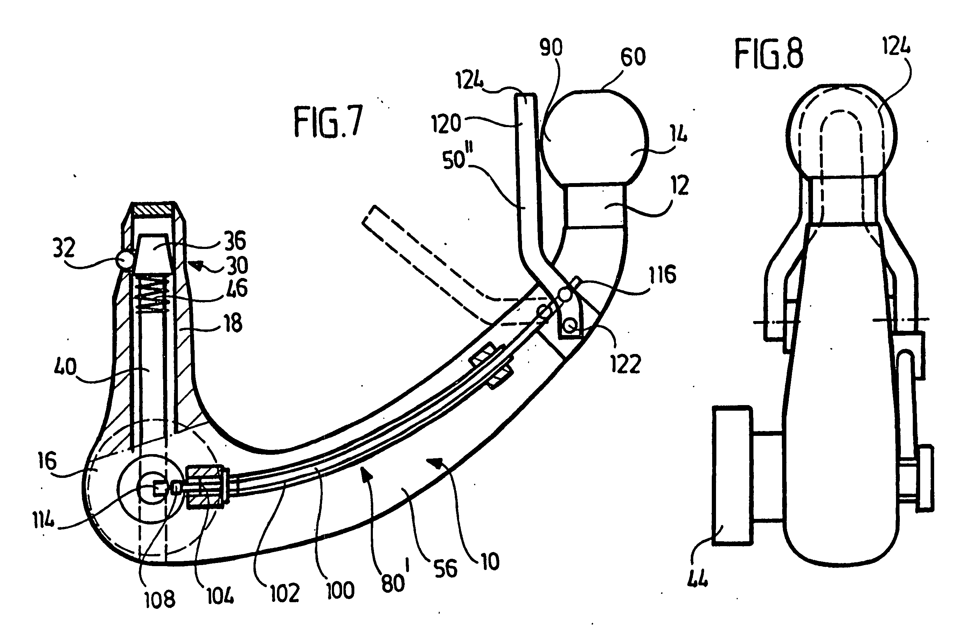

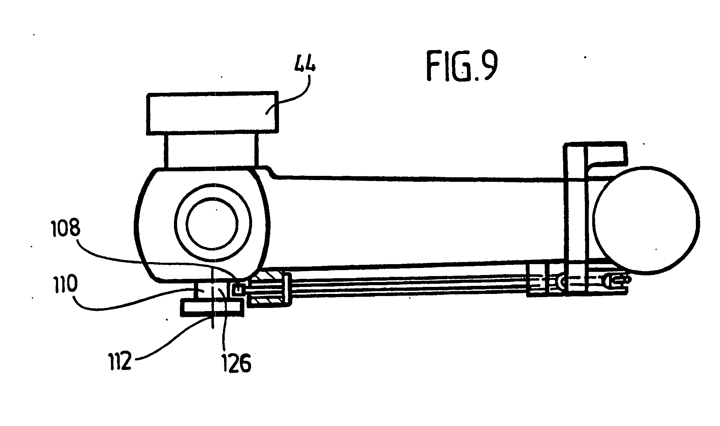

Bei einem dritten Ausführungsbeispiel einer erfindungsgemäßen Anhängevorrichtung, dargestellt in den Fig. 7 bis 9, sind diejenigen Teile, die mit denen des ersten Ausführungsbeispiels identisch sind, ebenfalls mit denselben Bezugszeichen versehen, so daß hinsichtlich der Beschreibung derselben vollinhaltlich auf die Ausführungen zu den voranstehenden Ausführungsbeispielen Bezug genommen werden kann.

Im Gegensatz zu den voranstehenden Ausführungsbeispielen umfaßt die Kopplungseinrichtung 80' ein elastisch biegbares Schubelement 100, beispielsweise in Form einer Schubstange, welche in einem Führungsrohr 102 geführt ist und einen als Stößel 104 wirkenden Endabschnitt aufweist, welcher mit einem inneren Ende 108 einer mit dem Handbetätigungselement 44 gekoppelten Kulissenfläche 110 zugewandt ist, welche um eine Achse 112 gemeinsam mit dem Handbetätigungselement 44 drehbar ist und in der Fixierstellung der Fixiereinrichtung 30 eine Vertiefung 114 aufweist, in welche das innere Ende 108 dann eintauchen kann, wenn das Handbetätigungselement 44 in der Fixierstellung steht, ansonsten jedoch nicht.

Ferner ist das Schubelement 100 an einem betätigungsseitigen Ende 116 mit dem Anhängeverhinderungselement 50" gekoppelt, welches ebenfalls als U-förmiger Bügel 120 ausgebildet ist, der allerdings im Mittelabschnitt 56, vorzugsweise nahe dem ersten Ende 12 um eine Achse 122 drehbar gelagert ist und sich in seiner in Fig. 7 dargestellten Anhängeverhinderungsstellung nahe der Vorderseite 90 der Kupplungskugel 14 nach oben erstreckt und mit seinem U-Bogen 124 ungefähr in Höhe der Oberseite 60 der Kupplungskugel 14 liegt, so daß der Bügel 120 in seiner Anhängeverhinderungsstellung ebenfalls ein Anhängen eines Anhängers an die Kupplungskugel 14 verhindert.

Der Bügel 120 ist lediglich dann aus seiner Anhängeverhinderungsstellung in seine in Fig. 7 gestrichelt dargestellte Anhängestellung bringbar, wenn das Schubelement 100 mit dem inneren Ende 108 in die Vertiefung 114 der Kulissenfläche 110 eintauchen kann, dies ist nur der Fall, wenn die Betätigungsstange 40 in der Fixierstellung steht.

Steht die Betätigungsstange 40 außerhalb der Fixierstellung, so schlägt das innere Ende 108 gegen eine sich bis zur Vertiefung 114 erstreckende Kulissenfläche 126 an, die jedoch keine Bewegung des inneren Endes 108 um einen derartigen Weg zuläßt, daß das Anhängeverhinderungselement 50" von der Anhängeverhinderungsstellung in die Anhängestellung bewegbar ist, so daß ein Einwirken auf das Anhängeverhinderungselement 50" nicht zu einem Erreichen der Anhängestellung führen kann.

Damit ist sichergestellt, daß nur in der Fixierstellung der Fixiereinrichtung 30 das Anhängeverhinderungselement 50" von der Anhängeverhinderungsstellung in die in Fig. 7 gestrichelt dargestellte Anhängestellung bewegbar ist.

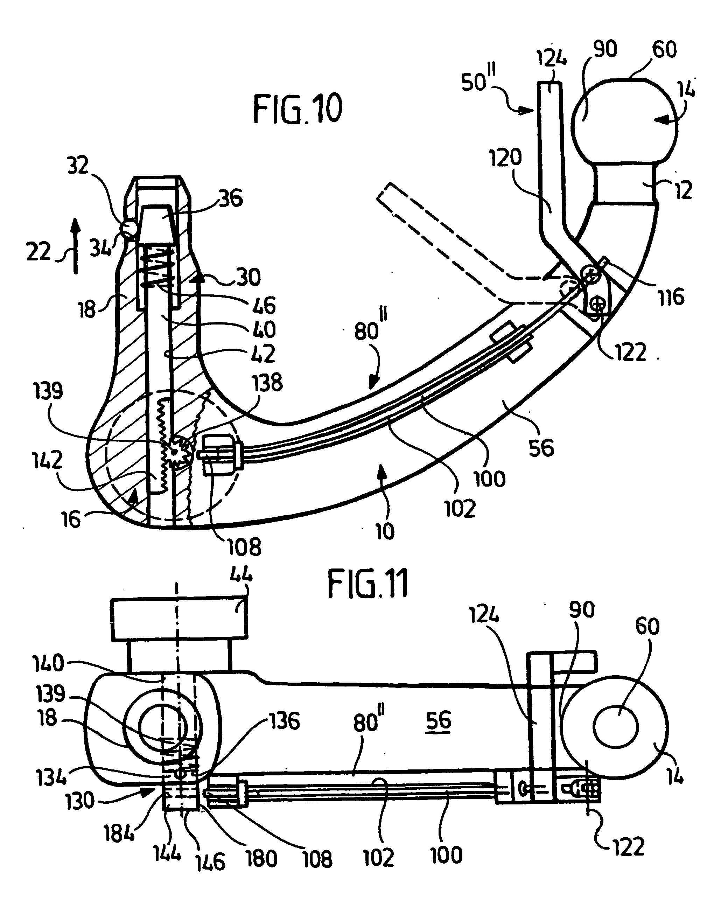

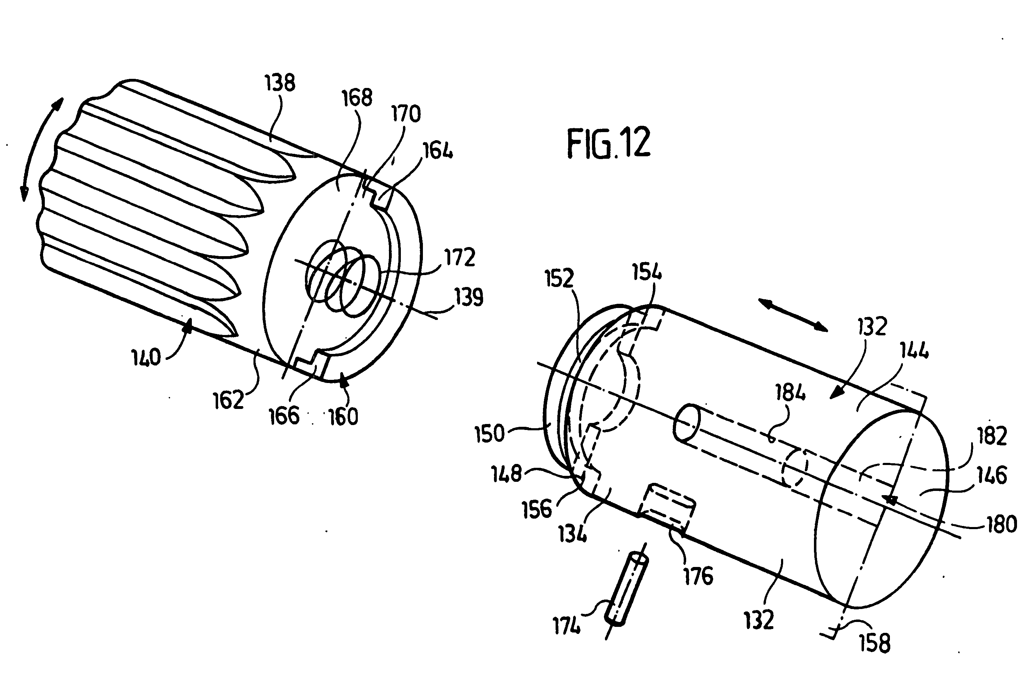

Bei einem vierten Ausführungsbeispiel, dargestellt in den Fig. 10 bis 12 sind diejenigen Teile, die mit denen von einem oder mehreren der voranstehenden Ausführungsbeispielen identisch sind, mit denselben Bezugszeichen versehen, so daß hinsichtlich der Beschreibung derselben auf die Ausführungen zu den voranstehenden Ausführungsbeispielen Bezug genommen wird.

Im Gegensatz zum dritten Ausführungsbeispiel umfaßt die Kopplungseinrichtung 80" noch eine Sicherungsvorrichtung 130, welche dazu dient, die Fixiereinrichtung 30 gegen eine ungewollte Betätigung zu sichern.

Die Sicherungsvorrichtung 130 ist hierzu mit einem Betätigungsknopf 132 versehen, welcher mit einem Führungsbereich 134 in einer Bohrung 136 des Kugelhalses 10 im Bereich des zweiten Endes 16 koaxial zu einem Ritzel 138 gelagert ist. Das Ritzel 138 sitzt dabei auf einer ebenfalls in dem Kugelhals 10 im Bereich des Endes 16 gelagerten und drehfest mit dem Handbetätigungselement 44 verbundenen und um eine Achse 139 drehbaren Antriebswelle 140 und ist mit einem Zahnstangenabschnitt 142 der Betätigungsstange 40 in Eingriff, um die Betätigungsstange 40 der Fixiereinrichtung 30 von der Fixierstellung in die Nichtfixierstellung bewegen zu können.

Ferner umfaßt der Betätigungsknopf 132 einen über den Kugelhals 10 im Bereich des Endes überstehenden Betätigungsbereich 144 mit einer Druckfläche 146, wobei bei Beaufschlagung der Druckfläche 146 der Betätigungsknopf 132 in den Kugelhals 10 im Bereich des Endes 16 hineinschiebbar ist.

Der Druckfläche 146 gegenüberliegend ist an dem Betätigungsknopf 132 ein im Abstand von einer Endfläche 148 angeordneter Sicherungskörper 150 vorgesehen, welcher beispielsweise als Ringhälfte ausgebildet ist, die in einem derartigen Abstand von der Endfläche 148 angeordnet ist, daß zwischen dem Sicherungskörper 150 und der Endfläche 148 eine der Achse 139 abgewandte Nut 152 verbleibt. Ferner umfaßt der Sicherungskörper 150 endseitig desselben liegende Sicherungsflächen 154, 156, welche in Ebenen liegen, die durch die Achse 139 der Antriebswelle 140 hindurchverlaufen, vorzugsweise in einer gemeinsamen Ebene 158.

Ferner ist die Antriebswelle 140 ebenfalls mit einem Sicherungskörper 160 versehen, welcher ebenfalls Sicherungsflächen 164 und 166 aufweist, die in durch die Achse 139 der Antriebswelle 140 hindurchverlaufenden Ebenen liegen, wobei der Sicherungskörper 160 in einem derartigen Abstand von einer Endfläche 168 der Antriebswelle 140 angeordnet ist, daß zwischen dieser und dem Sicherungskörper 160 eine Nut 170 verbleibt, wobei die Nut 170 der Achse der Antriebswelle 140 zugewandt ist, während die Nut 152 zwischen dem ersten Sicherungskörper 150 und der Endfläche 148 in entgegengesetzter Richtung, das heißt von der Achse der Antriebswelle 140 weg nach außen gewandt ist.

Ferner ist zwischen dem Ende 162 der Antriebswelle 140 und dem Betätigungsknopf 132 eine Druckfeder 172 wirksam, welche den Betätigungsknopf 132 in Richtung von der Endfläche 168 der Antriebswelle 140 weg in Richtung einer Sicherungsstellung beaufschlagt, in welcher die Sicherungsflächen 154 und 156 den Sicherungsflächen 164 und 166 gegenüberliegend angeordnet sind und der Betätigungsknopf 132 ein Drehen der Antriebswelle 140 dadurch blockiert, daß der Betätigungsknopf 132 mittels eines Führungselements 174 drehfest und begrenzt in Richtung der Bohrung 136 verschieblich gelagert ist. Das Führungselement 174 sitz fest im Ende 16 des Kugelhalses 10, greift dabei in ein Langloch 176 im Führungsbereich 134 des Betätigungsknopfs 132 ein und legt außerdem durch Zusammenwirken mit dem Langloch 176 zumindest die Sicherungsstellung des Betätigungsknopfs 132 fest.

Wird nun der Betätigungsknopf 132 durch Beaufschlagen der Druckfläche 146 und gegen die Kraft der Druckfeder 172 in Richtung der Endfläche 168 bewegt, so erfolgt eine Verschiebung des Sicherungskörpers 150 relativ zum Sicherungskörper 160 so, daß der Sicherungskörper 150 in die Nut 170 eintauchen kann und der Sicherungskörper 160 in die Nut 152, so daß folglich auch die Sicherungsflächen 154 bzw. 164 und 156 bzw. 166 nicht mehr einander gegenüberliegen und somit der erste Sicherungskörper 150 und der zweite Sicherungskörper 160 keine Blockierung der Drehung der Antriebswelle 140 relativ zum Betätigungsknopf 132 verhindern können.

In dieser Lösestellung des Betätigungsknopfes 132 ist die Sicherungsvorrichtung 130 nicht mehr in der Lage, die Fixiereinrichtung 30 gegen eine Betätigung zu sichern. Somit besteht die Möglichkeit, mittels des Handbetätigungselements 44 die Antriebswelle 140 und somit das Ritzel 138 zu drehen und somit die Fixiereinrichtung 30 von der Fixierstellung in die Nichtfixierstellung zu überführen.

Unmittelbar nach Verlassen der Fixierstellung der Fixiereinrichtung 30 ist es nicht mehr notwendig, den Betätigungsknopf 132 der Sicherungsvorrichtung 130 zu betätigen, denn der Betätigungsknopf 132 verbleibt dadurch, daß sich der Sicherungskörper 150 in der Nut 170 und der Sicherungskörper 160 in der Nut 152 bewegen, so lange in der Lösestellung, bis die Fixiereinrichtung 30 in ihre Fixierstellung übergegangen ist. Erst in dieser Stellung hat die Druckfeder 172 die Möglichkeit, den Betätigungsknopf 132 von der Endfläche 168 weg in Richtung der Sicherungsstellung zu bewegen, in welcher wieder die Sicherungsflächen 154 bzw. 164 und 156 bzw. 166 einander gegenüberliegen und somit ein Drehen der Antriebswelle 140 blockiert ist.

Die Sicherungsvorrichtung 130 wirkt nun dadurch mit dem inneren Ende 108 des Schubelements 100 zusammen, daß der Betätigungsknopf 132 eine parallel zur Achse 139 der Antriebswelle 140 verlaufende Kulissenfläche 180 aufweist, die einerseits durch eine Außenmantelfläche 182 des Betätigungsknopfes 132 gebildet ist und andererseits eine Vertiefung 184, beispielsweise in Form einer den Betätigungsknopf 132 durchsetzenden Bohrung, aufweist.

Nur dann, wenn die Vertiefung 184 mit dem inneren Ende 108 des Schubelements 100 fluchtet, kann dieses in die Vertiefung 184 eintauchen und somit besteht in gleicher Weise wie beim dritten Ausführungsbeispiel auch nur dann die Möglichkeit, das Anhängeverhinderungselement 50" von der Anhängeverhinderungsstellung in die Anhängestellung zu überführen. In allen anderen Stellungen des Betätigungsknopfes 132 verhindert der Bereich 182 der Kulissenfläche 180 das Überführen des Anhängeverhinderungselements 50" von der Anhängeverhinderungsstellung in die Anhängestellung.

Da andererseits die Sicherungsvorrichtung 130 nur dann in der Sicherungsstellung stehen kann, wenn auch die Fixiereinrichtung 30 in der Fixierstellung steht, ist somit sichergestellt, daß das Anhängeverhinderungselements 50" nur dann in die Anhängestellung bewegbar ist, wenn der Kugelhals 10 sicher in der fahrzeugfesten Aufnahme 20 fixiert ist.

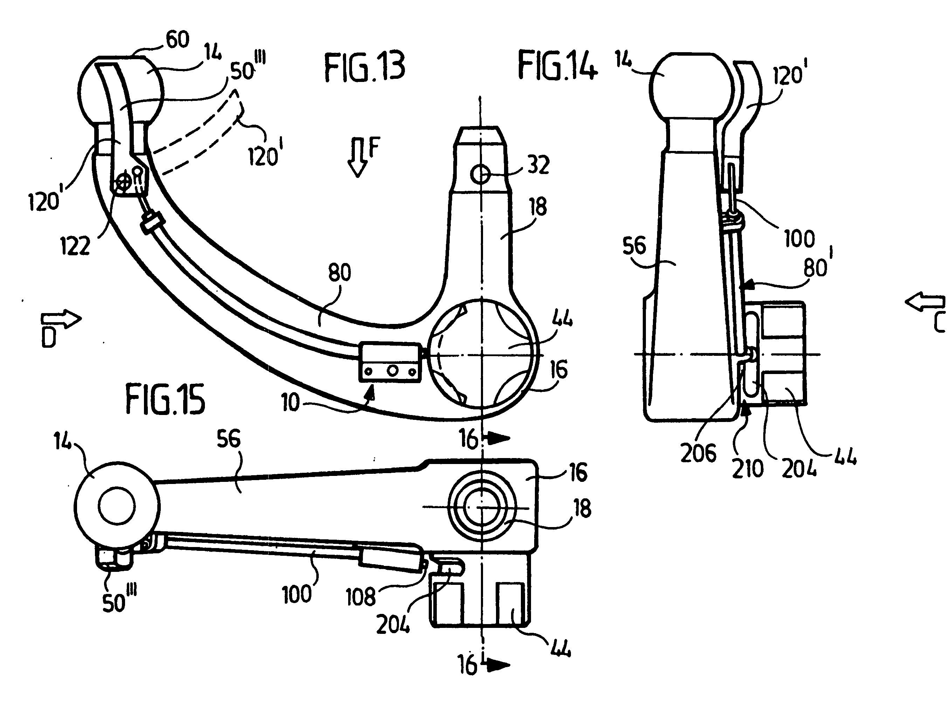

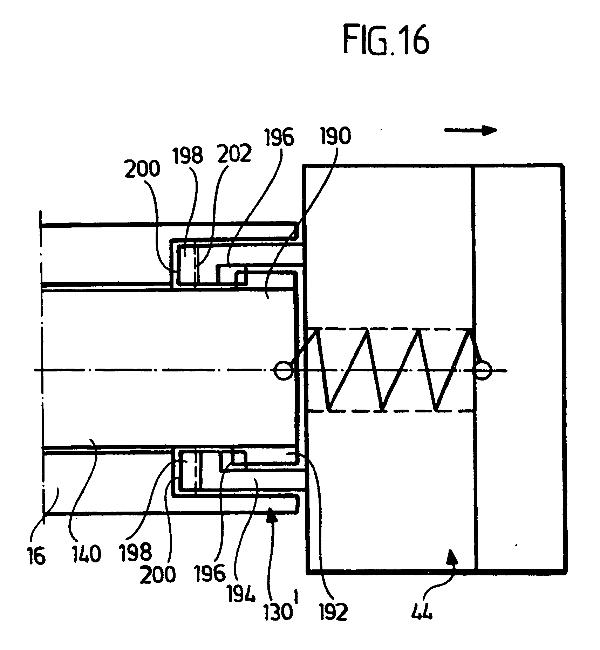

Bei einem fünften Ausführungsbeispiel, dargestellt in den Figuren 13 bis 16 ist die Sicherungsvorrichtung 130', wie in Fig. 16 dargestellt, zwischen der Antriebswelle 140 und dem Handbetätigungselement 44 wirksam und bildet eine Verbindung zwischen diesen beiden.

In diesem Fall ist die Antriebswelle 140 an ihrem dem Handbetätigungselement 44 zugewandten Ende 190 mit beispielsweise radial überstehenden Mitnahmekörpern 192 versehen.

Ferner ist das Handbetätigungselement 44 mit einer Hülse 194 versehen, welche die Mitnahmekörper 192 radial außenliegend übergreift und relativ zur Antriebswelle 140 drehbar ist.

Die Hülse 196 ist mitsamt dem Handbetätigungselement 144 in Richtung der Achse der Antriebswelle 140 zwischen der in Fig. 16 dargestellten Sicherungsstellung, in welchem das Handbetätigungselement 44 an dem Ende 190 der Antriebswelle 140 anliegt, in eine Lösestellung verschiebbar, in welchem das Handbetätigungselement 144 im Abstand vom Ende 190 angeordnet ist.

Die Hülse 194 weist ihrerseits zweite Mitnahmekörper 196 auf, welche ständig mit den Mitnahmekörpern 192 in Eingriff stehen, so daß in jeder axialen Stellung der Hülse 194 relativ zur Antriebswelle 140 eine drehfeste Verbindung zwischen dem Handbetätigungselement 44 und der Antriebswelle 140 besteht.

Ferner weist die Hülse 194 an ihrer dem Handbetätigungselement 44 abgewandten Stirnseite Vorsprünge 198 auf, welche dann in Vertiefungen 200 im Ende 16 des Kugelhalses 10 eintauchen können, wenn das Handbetätigungselement 44 in eine Stellung gedreht ist, welche der Fixierstellung der Fixiereinrichtung 30 entspricht.

Die Stellung, in welcher die Vorsprünge 198 in die Vertiefungen 200 eintauchen, ist die Sicherungsstellung des Handbetätigungselements 44, da durch die in die Vertiefungen 200 eingreifenden Vorsprünge 198 eine Drehung des Handbetätigungselements 44 nicht möglich ist.

Wird dagegen das Handbetätigungselement 44 von der Sicherungsstellung in die Lösestellung, das heißt weg vom Ende 190 der Antriebswelle 140 bewegt, so verlassen die Vorsprünge 198 die Vertiefungen 200 und das Handbetätigungselement und mit diesem auch die Antriebswelle 140 sind frei gegenüber dem Ende 16 des Kugelhalses 10 drehbar, so daß ein Überführen der Fixiereinrichtung von der Fixierstellung in die Nichtfixierstellung möglich ist.

Wird dabei das Handbetätigungselement 44 nicht mehr manuell vom Ende 190 weggezogen, so liegen die Vorsprünge 198 auf seitlich der Vertiefungen 200 jedoch in Richtung des Endes 190 versetzt liegenden Flanschflächen 202 auf und gleiten so lange auf diesen Flanschflächen 202, bis die Vorsprünge 198 wieder in die Vertiefungen 200 eintreten und somit das Handbetätigungselement 44 von der Lösestellung in die Sicherungsstellung übergehen kann und in letzterer drehfest in dem Ende 16 des Kugelhalses 10 fixiert ist.

Das Zusammenwirken der Sicherungsvorrichtung 130' mit dem inneren Ende 108 des Schubelements 100 erfolgt dadurch, daß das Handbetätigungselement 144 mantelseitig mit einer Nut 204 versehen ist, in welche das innere Ende 108 dann eintauchen kann, wenn das Handbetätigungselement 44 in der Sicherungsstellung steht.

In der Lösestellung ist dagegen die Nut 204 so weit seitlich in Richtung der Achse 139 der Antriebswelle 140 verschoben, daß eine seitlich neben der Nut 204 liegende Mantelfläche 206 des Handbetätigungselements 44 die Bewegungen des inneren Endes 108 blockiert und somit auch das Anhängeverhinderungselement 50"' nicht von der Anhängeverhinderungsstellung in die Lösestellung bewegbar ist.

Das Anhängeverhinderungselement 50"' stellt dabei eine vereinfachte Version des Anhängeverhinderungselements 50" dar, in dem dieses lediglich einen Arm 120' aufweist, welcher sich von der Achse 122 in Richtung des Kugelhalses 14 erstreckt und in der Anhängeverhinderungsstellung seitlich neben der Kupplungskugel 14 steht, während in der Anhängestellung der Arm 120' sich in ähnlicher Weise wie der Bügel 120 in Richtung des Kraftfahrzeugs erstreckt.

## Patentansprüche

1. Anhängevorrichtung umfassend einen Kugelhals (10), eine an einem ersten Ende (12) des Kugelhalses (10) angeordnete Kupplungskugel (14), ein an einem zweiten Ende (16) des Kugelhalses (10) angeordnetes Halteelement (18), welches in eine fahrzeugfeste Aufnahme (20) einsetzbar ist und eine Fixiereinrichtung (30) aufweist, mit welcher in einer Fixierstellung das Halteelement (18) an der Aufnahme (20) fixierbar ist und in einer Nichtfixierstellung das Halteelement (18) relativ zur Aufnahme (20) bewegbar ist, und ein der Kupplungskugel (14) zugeordnetes Anhängeverhinderungselement (50), welches in einer Anhängeverhinderungsstellung ein Aufsetzen einer Kupplungskugelaufnahme verhindert, und in einer Anhängestellung das Aufsetzen der Kupplungskugelaufnahme zuläßt, wobei eine Kopplungseinrichtung (80) zwischen den Stellungen der Fixiereinrichtung (30) und den Stellungen des Anhängeverhinderungselements (50) vorgesehen ist,
**dadurch gekennzeichnet,**
**daß** die Kopplungseinrichtung (80) die Stellungen der Fixiereinrichtung (30) mit den Stellungen des Anhängeverhinderungselements (50) derart koppelt, daß nur dann, wenn die Fixiereinrichtung (30) in der Fixierstellung steht, das Anhängeverhinderungselement (50) in die Anhängestellung bewegbar ist und dann, wenn die Fixiereinrichtung (30) außerhalb der Fixierstellung steht, das Anhängeverhinderungselement (50) gegen eine Bewegung von der Anhängeverhinderungsstellung in die Anhängestellung blockiert ist.

2. Anhängevorrichtung nach Anspruch 1, **dadurch gekennzeichnet, daß** die Kopplungseinrichtung (80) die Fixiereinrichtung (30) in der Fixierstellung festlegt, wenn das Anhängeverhinderungselement (50) in der Anhängestellung steht.

3. Anhängevorrichtung nach Anspruch 1 oder 2, **dadurch gekennzeichnet, daß** das Anhängeverhinderungselement (50) an dem Kugelhals (10) bewegbar gelagert ist.

4. Anhängevorrichtung nach Anspruch 3, **dadurch gekennzeichnet, daß** das Anhängeverhinderungselement (50) an dem Kugelhals (10) schwenkbar gelagert ist.

5. Anhängevorrichtung nach Anspruch 4, **dadurch gekennzeichnet, daß** das Anhängeverhinderungselement (50) an einander gegenüberliegenden Seiten des Kugelhalses (10) gelagert ist.

6. Anhängevorrichtung nach einem der voranstehenden Ansprüche, **dadurch gekennzeichnet, daß** das Anhängeverhinderungselement (50) auf einer dem Halteelement (18) zugewandten Seite der Kupplungskugel (14) angeordnet ist.

7. Anhängevorrichtung nach Anspruch 6, **dadurch gekennzeichnet, daß** das Anhängeverhinderungselement (50) zum Bewegen in die Anhängestellung in Richtung des Halteelements (18) bewegbar ist.

8. Anhängevorrichtung nach einem der voranstehenden Ansprüche, **dadurch gekennzeichnet, daß** das Anhängeverhinderungselement (50) die Kupplungskugel (14) zumindest bereichsweise oberflächlich übergreifend ausgebildet ist.

9. Anhängevorrichtung nach Anspruch 8, **dadurch gekennzeichnet, daß** das Anhängeverhinderungselement (50') eine die Kupplungskugel (14) zumindest bereichsweise übergreifende Schale (88) umfaßt.

10. Anhängevorrichtung nach Anspruch 8, **dadurch gekennzeichnet, daß** das Anhängeverhinderungselement (50, 50') einen Bügel (54, 120) umfaßt.

11. Anhängevorrichtung nach einem der Ansprüche 8 bis 10, **dadurch gekennzeichnet, daß** das Anhängeverhinderungselement (50) in der Anhängeverhinderungsstellung bis zur Oberseite (60) der Kupplungskugel (14) reicht.

12. Anhängevorrichtung nach einem der voranstehenden Ansprüche, **dadurch gekennzeichnet, daß** die Kopplungseinrichtung (80) das Erreichen der Fixierstellung durch die Fixiereinrichtung (30) erfaßt.

13. Anhängevorrichtung nach einem der voranstehenden Ansprüche, **dadurch gekennzeichnet, daß** die Kopplungseinrichtung (80) ein längsbewegliches Element (64, 100) aufweist, über welches eine Kopplung der Stellungen der Fixiereinrichtung (30) mit Stellungen des Anhängeverhinderungselements (50) erfolgt.

14. Anhängevorrichtung nach Anspruch 13, **dadurch gekennzeichnet, daß** eine zum Erreichen der Anhängestellung erforderliche Bewegung des längsbeweglichen Elements (64, 100) dann blockiert ist, wenn die Fixiereinrichtung (30) außerhalb der Fixierstellung steht.

15. Anhängevorrichtung nach Anspruch 13 oder 14, **dadurch gekennzeichnet, daß** die Kopplungseinrichtung (80) eine Kulissenbahn (70, 72; 114, 126, 180, 210) mit einem Bahnfolger (68; 108) umfaßt, von denen einer mit dem längsbeweglichen Element (64, 100) gekoppelt ist.

16. Anhängevorrichtung nach Anspruch 15, **dadurch gekennzeichnet, daß** die Kulissenbahn (70, 72; 114, 126; 180, 210) mit der Fixiereinrichtung (30) gekoppelt ist und daß der Bahnfolger (68, 108) mit dem längsbeweglichen Element (64, 100) gekoppelt ist.

17. Anhängevorrichtung nach einem der Ansprüche 12 bis 16, **dadurch gekennzeichnet, daß** die Kopplungseinrichtung (80', 80") ein biegbares längsbewegliches Element (100) umfaßt.

18. Anhängevorrichtung nach einem der Ansprüche 12 bis 17, **dadurch gekennzeichnet, daß** die Kopplungseinrichtung (80) eine Sicherungsvorrichtung (130) für die Fixiereinrichtung (30) umfaßt, welche in einer Sicherungsstellung ein Überführen der Fixiereinrichtung (30) von der Fixierstellung in die Nichtfixierstellung verhindert und in einer Lösestellung das Überführen der Fixiereinrichtung (30) von der Fixierstellung in die Nichtfixierstellung zuläßt.

19. Anhängevorrichtung nach Anspruch 18, **dadurch gekennzeichnet, daß** bei in der Anhängestellung stehendem Anhängeverhinderungselement (50) mit dem längsbeweglichen Element (64, 100) ein Übergang der Sicherungsvorrichtung (130) von der Sicherungsstellung in die Lösestellung blockierbar ist.

20. Anhängevorrichtung nach Anspruch 18 oder 19, **dadurch gekennzeichnet, daß** die Sicherungsvorrichtung (130) derart mit der Fixiereinrichtung (30) zusammenwirkt, daß die Sicherungsvorrichtung (130) nur in der Fxierstellung der Fixiereinrichtung (30) in die Sicherungsstellung übergehen kann.

21. Anhängevorrichtung nach Anspruch 20, **dadurch gekennzeichnet, daß** die Sicherungsvorrichtung (130) in allen Stellungen der Fixiereinrichtung (30) außerhalb der Fixierstellung in der Lösestellung steht.

22. Anhängevorrichtung nach einem der Ansprüche 18 bis 21, **dadurch gekennzeichnet, daß** die Sicherungsvorrichtung (130) in der Lösestellung über das längsbewegliche Element (100) ein Bewegen des Anhängeverhinderungselements (50) von der Anhängeverhinderungsstellung in die Anhängestellung blockiert.

23. Anhängevorrichtung nach Anspruch 22, **dadurch gekennzeichnet, daß** die Kopplungseinrichtung (80) über das längsbewegliche Element (64, 100) die Fixierstellung der Fixiereinrichtung (30) erfaßt.

24. Anhängevorrichtung nach Anspruch 25, **dadurch gekennzeichnet, daß** das längsbewegliche Element (64, 100) mit der Fixiereinrichtung (30) zusammenwirkt.

25. Anhängevorrichtung nach Anspruch 23, **dadurch gekennzeichnet, daß** das längsbewegliche Element (64, 100) mit der Sicherungsvorrichtung (130) zum Erfassen der Fixierstellung der Fixiereinrichtung (30) zusammenwirkt.

26. Anhängevorrichtung nach einem der voranstehenden Ansprüche, **dadurch gekennzeichnet, daß** die Kopplungseinrichtung (80) das Anhängeverhinderungselement (50) in Richtung seiner Anhängeverhinderungsstellung beaufschlagt.

## Claims

1. Trailer attachment device comprising a ball neck (10), a coupling ball (14) disposed on a first end (12) of the ball neck (10), a retaining element (18) disposed on a second end (16) of the ball neck (10) and insertable into a vehicle-fixed receiver (20) and having a fixing device (30), by means of which in a fixing position the retaining element (10) is fixable to the receiver (20) and in a non-fixing position the retaining element (18) is movable relative to the receiver (20), and an anti-attachment element (50), which is associated with the coupling ball (14) and in an anti-attachment position prevents mounting of a coupling ball receiver and in an attachment position allows mounting of the coupling ball receiver, wherein a coupling device (80) is provided between the positions of the fixing device (30) and the positions of the anti-attachment element (50),
**characterized in**
**that** the coupling device (80) couples the positions of the fixing device (30) with the positions of the anti-attachment element (50) in such a way that it is only when the fixing device (30) is in the fixing position that the anti-attachment element (50) is movable into the attachment position and when the fixing device (30) is outside of the fixing position that the anti-attachment element (50) is prevented from moving from the anti-attachment position into the attachment position.

2. Trailer attachment device according to claim 1, **characterized in that** the coupling device (80) fixes the fixing device (30) in the fixing position when the anti-attachment element (50) is in the attachment position.

3. Trailer attachment device according to claim 1 or 2, **characterized in that** the anti-attachment element (50) is supported movably on the ball neck (10).

4. Trailer attachment device according to claim 3, **characterized in that** the anti-attachment element (50) is supported pivotably on the ball neck (10).

5. Trailer attachment device according to claim 4, **characterized in that** the anti-attachment element (50) is supported on mutually opposite sides of the ball neck (10).

6. Trailer attachment device according to one of the preceding claims, **characterized in that** the anti-attachment element (50) is disposed at a side of the coupling ball (14) facing the retaining element (18).

7. Trailer attachment device according to claim 6, **characterized in that** the anti-attachment element (50), for moving into the attachment position, is movable in the direction of the retaining element (18).

8. Trailer attachment device according to one of the preceding claims, **characterized in that** the anti-attachment element (50) is designed to overlap the surface of the coupling ball (14) at least in regions thereof.

9. Trailer attachment device according to claim 8, **characterized in that** the anti-attachment element (50') comprises a shell (88), which overlaps the coupling ball (14) at least in regions thereof.

10. Trailer attachment device according to claim 8, **characterized in that** the anti-attachment element (50, 50') comprises a bow member (54, 120).

11. Trailer attachment device according to one of claims 8 to 10, **characterized in that** the anti-attachment element (50) in the anti-attachment position extends as far as the top (60) of the coupling ball (14).

12. Trailer attachment device according to one of the preceding claims, **characterized in that** the coupling device (80) detects the attaining of the fixing position by the fixing device (30).

13. Trailer attachment device according to one of the preceding claims, **characterized in that** the coupling device (80) comprises a longitudinally movable element (64, 100), by means of which a coupling of the positions of the fixing device (30) with positions of the anti-attachment element (50) is effected.

14. Trailer attachment device according to claim 13, **characterized in that** a movement of the longitudinally movable element (64, 100) that is necessary for attaining the attachment position is prevented when the fixing device (30) is outside of the fixing position.

15. Trailer attachment device according to claim 13 or 14, **characterized in that** the coupling device (80) comprises a cam track (70, 72; 114, 126, 180, 210) with a track follower (68; 108), one of which is coupled to the longitudinally movable element (64, 100).

16. Trailer attachment device according to claim 15, **characterized in that** the cam track (70, 72; 114, 126; 180, 210) is coupled to the fixing device (30) and that the track follower (68, 108) is coupled to the longitudinally movable element (64, 100).

17. Trailer attachment device according to one of claims 12 to 16, **characterized in that** the coupling device (80', 80") comprises a bendable longitudinally movable element (100).

18. Trailer attachment device according to one of claims 12 to 17, **characterized in that** the coupling device (80) comprises a locking apparatus (130) for the fixing device (30) that, in a locking position, prevents a transfer of the fixing device (30) from the fixing position to the non-fixing position and, in a release position, allows the transfer of the fixing device (30) from the fixing position to the non-fixing position.

19. Trailer attachment device according to claim 18, **characterized in that**, when the anti-attachment element (50) is in the attachment position, a changeover of the locking apparatus (130) from the locking position to the release position is preventable by means of the longitudinally movable element (64, 100).

20. Trailer attachment device according to claim 18 or 19, **characterized in that** the locking apparatus (130) interacts in such a way with the fixing device (30) that the locking apparatus (130) may change over to the locking position only in the fixing position of the fixing device (30).

21. Trailer attachment device according to claim 20, **characterized in that** the locking apparatus (130) is in the release position in all positions of the fixing device (30) outside of the fixing position.

22. Trailer attachment device according to one of claims 18 to 21, **characterized in that** the locking apparatus (130) in the release position by means of the longitudinally movable element (100) prevents the anti-attachment element (50) from moving from the anti-attachment position to the attachment position.

23. Trailer attachment device according to claim 22, **characterized in that** the coupling device (80) detects the fixing position of the fixing device (30) by means of the longitudinally movable element (64, 100).

24. Trailer attachment device according to claim 25, **characterized in that** the longitudinally movable element (64, 100) interacts with the fixing device (30).

25. Trailer attachment device according to claim 23, **characterized in that** the longitudinally movable element (64, 100) interacts with the locking apparatus (130) to detect the fixing position of the fixing device (30).

26. Trailer attachment device according to one of the preceding claims, **characterized in that** the coupling device (80) urges the anti-attachment element (50) in the direction of its anti-attachment position.

## Revendications

1. Attelage de remorque, comprenant un col porte-boule (10), une boule d'attelage (14) disposée à une première extrémité (12) du col porte-boule (10), un élément de maintien (18), disposé à une deuxième extrémité (16) du col porte-boule (10) lequel est susceptible d'être inséré dans un logement (20) fixe par rapport au véhicule et présentant un dispositif de fixation (30), à l'aide duquel, en une position de fixation, l'élément de maintien (18) est susceptible d'être fixé dans le logement (20) et, en une position de non fixation, l'élément de maintien (18) est susceptible d'être déplacé par rapport au logement (20), et un élément d'empêchement d'attelage (50) associé à la boule d'attelage (14), qui, en une position d'empêchement d'attelage empêche un placement d'un logement de boule d'attelage et, en une position d'attelage, permet le placement du logement de boule d'attelage, un dispositif d'accouplement (80) étant prévu entre les positions du dispositif de fixation (30) et les positions de l'élément d'empêchement d'attelage (50), **caractérisé en ce que** le dispositif d'accouplement (80) accouple les positions du dispositif de fixation (30) aux positions de l'élément d'empêchement d'attelage (50), de manière que l'élément d'empêchement d'attelage (50) soit déplaçable à la position d'attelage, uniquement lorsque le dispositif de fixation (30) est à la position de fixation et, ensuite, lorsque le dispositif de fixation (30) est hors de la position de fixation, l'élément d'empêchement d'attelage (50) est bloqué contre tout déplacement par le dispositif d'empêchement d'attelage placé à la position d'attelage.

2. Dispositif d'attelage selon la revendication 1, **caractérisé en ce que** le dispositif d'accouplement (80) fixe le dispositif de fixation (30) à la position de fixation, lorsque l'élément d'empêchement d'attelage (50) est situé à la position d'attelage.

3. Dispositif d'attelage selon la revendication 1 ou 2, **caractérisé en ce que** l'élément d'empêchement d'attelage (50) est monté de façon déplaçable sur le col porte-boule (10).

4. Dispositif d'attelage selon la revendication 3, **caractérisé en ce que** l'élément d'empêchement d'attelage (50) est monté à pivotement sur le col porte-boule (10).

5. Dispositif d'attelage selon la revendication 4, **caractérisé en ce que** l'élément d'empêchement d'attelage (50) est monté sur des côtés, opposés les uns aux autres, du col porte-boule (10).

6. Dispositif d'attelage selon l'une des revendications précédentes, **caractérisé en ce que** l'élément d'empêchement d'attelage (50) est disposé sur un côté, tourné vers l'élément de maintien (18), de la boule d'attelage (14).

7. Dispositif d'attelage selon la revendication 6, **caractérisé en ce que** l'élément d'empêchement d'attelage (50) est déplaçable en direction de l'élément de maintien (18), afin d'effectuer un déplacement à la position d'attelage.

8. Dispositif d'attelage selon l'une des revendications précédentes, **caractérisé en ce que** l'élément d'empêchement d'attelage (50) est réalisé en entourant en surface, au moins par zones, la boule d'attelage (14).

9. Dispositif d'attelage selon la revendication 8, **caractérisé en ce que** l'élément d'empêchement d'attelage (50') comprend une coque (88) entourant, au moins par zones, la boule d'attelage (14).

10. Dispositif d'attelage selon la revendication 8, **caractérisé en ce que** l'élément d'empêchement d'attelage (50, 50') comprend un étrier (54, 120).

11. Dispositif d'attelage selon l'une des revendications 8 à 10, **caractérisé en ce que** l'élément d'empêchement d'attelage (50), à la position d'empêchement d'attelage, arrive jusqu'à la face supérieure (60) de la boule d'attelage (14).

12. Dispositif d'attelage selon l'une des revendications précédentes, **caractérisé en ce que** le dispositif d'accouplement (80) appréhende l'atteinte de la position de fixation, au moyen du dispositif de fixation (30).

13. Dispositif d'attelage selon l'une des revendications précédentes, **caractérisé en ce que** le dispositif d'accouplement (80) présente un élément (64, 100) déplaçable longitudinalement, par l'intermédiaire duquel un couplage des positions du dispositif de fixation (30) aux positions de l'élément d'empêchement d'attelage (50) s'effectue.

14. Dispositif d'attelage selon la revendication 13, **caractérisé en ce qu'**un déplacement, nécessaire pour l'atteinte de la position d'attelage, de l'élément déplaçable longitudinalement (64, 100), est bloqué lorsque le dispositif de fixation (30) est hors de la position de fixation.

15. Dispositif d'attelage selon la revendication 13 ou 14, **caractérisé en ce que** le dispositif d'accouplement (80) comprend une piste de coulissement (70, 72; 114, 126; 180, 210) avec un suiveur de piste (68; 108), dont l'un est couplé à l'élément déplaçable longitudinalement (64, 100).

16. Dispositif d'attelage selon la revendication 15, **caractérisé en ce que** la piste de coulissement (70, 72; 114, 126; 180, 210) est couplée au dispositif de fixation (30) et **en ce que** le suiveur de piste (68; 108) est couplé à l'élément déplaçable longitudinalement (64, 100).

17. Dispositif d'attelage selon l'une des revendications 12 à 16, **caractérisé en ce que** le dispositif d'accouplement (80', 80") comprend un élément déplaçable longitudinalement (100).

18. Dispositif d'attelage selon l'une des revendications 12 à 17, **caractérisé en ce que** le dispositif d'accouplement (80) comprend, pour le dispositif de fixation (30), un dispositif de sécurité (130) qui, en une position de sécurité, empêche tout passage du dispositif de fixation (30) de la position de fixation à la position de non fixation et, en une position de désolidarisation, permet le passage du dispositif de fixation (30) de la position de fixation à la position de non fixation.

19. Dispositif d'attelage selon la revendication 18, **caractérisé en ce que**, lorsque l'élément d'empêchement d'attelage (50), avec l'élément déplaçable longitudinalement (64, 100), est placé à la position d'attelage, un passage du dispositif de sécurité (130), de la position de sécurité à la position de désolidarisation, est susceptible d'être bloqué.

20. Dispositif d'attelage selon la revendication 18 ou 19, **caractérisé en ce que** le dispositif de sécurité (130) coopère avec le dispositif de fixation (30), de manière que le dispositif de sécurité (130) ne puisse passer à la position de sécurité, que lorsque le dispositif de fixation (30) est situé à la position de fixation.

21. Dispositif d'attelage selon la revendication 20, **caractérisé en ce que** le dispositif de sécurité (130) est à la position de désolidarisation, en toutes les positions du dispositif de fixation (30), hors la position de fixation.

22. Dispositif d'attelage selon l'une des revendications 18 à 21, **caractérisé en ce**, à la position de désolidarisation, que le dispositif de sécurité (130), par l'intermédiaire de l'élément déplaçable longitudinalement (100), bloque tout déplacement de l'élément d'empêchement d'attelage (50), de la position d'empêchement d'attelage à la position d'attelage.

23. Dispositif d'attelage selon la revendication 22, **caractérisé en ce que** le dispositif d'accouplement (80) appréhende la position de fixation du dispositif de fixation (30), par l'intermédiaire de l'élément déplaçable longitudinalement (64, 100).

24. Dispositif d'attelage selon la revendication 25, **caractérisé en ce** l'élément déplaçable longitudinalement (64, 100) coopère avec le dispositif de fixation (30).

25. Dispositif d'attelage selon la revendication 23, **caractérisé en ce que** l'élément déplaçable longitudinalement (64, 100) coopère avec le dispositif de sécurité (130), pour détecter la position de fixation du dispositif de fixation (30).

26. Dispositif d'attelage selon l'une des revendications précédentes, **caractérisé en ce que** le dispositif d'accouplement (80) sollicite l'élément d'empêchement d'attelage (50) dans la direction de sa position d'empêchement d'attelage.
